# EUROPEAN PATENT APPLICATION

(11) **EP 1 541 475 A1**
(43) Date of publication of application: **15.06.2005**
(21) Application number: 03788036.6
(22) Date of filing: 05.08.2003
(51) Int. Cl.: B65D 1/02, B29C 49/04, B29C 49/22, B29C 49/48

(54) **BLOW MOLDED PRODUCT**

(30) Priority: 06.08.2002 JP 2002229270
(71) Applicant: Yoshino Kogyosho Co., Ltd., Tokyo 136-8531 (JP)
(72) Inventor: AKIYAMA, Yoshio, c/o TOCHIGI FACTORY, Tochigi-shi, Tochigi 328-0125 (JP); TOKUDA, Hiroaki, c/o YOSHINO KOGYOSHO CO., LTD, Tokyo 136-8531 (JP); INNAMI, Kazuhisa, c/o OGAWA HOLD FACTORY, Oaza Ogawa, Ogawa-cho, Nasu-gun, Tochigi (JP); KOSHIO, Shuichi, c/o MATSUDO FACTORY, Matsudo-shi, Chiba 270-2297 (JP); SASAKI, Masaaki, c/o MATSUDO FACTORY, Matsudo-shi, Chiba 270-2297 (JP)
(74) Representative: Gray, James
(86) International application number: PCT/JP2003/009955
(87) International publication number: WO 2004/016510

(57) **Abstract**

A blow molded article obtained by a direct-blow molding process and including a bottom portion (4), a cylindrical body portion (3) arranged above the bottom portion (4), and a cylindrical mouth portion (2) arranged above the body portion (3). In the present invention, at least three pinch-off lines (7) caused by mold-pieces (15) of a split bottom-mold are formed in a diverging manner from a center of a bottom face (5) of the molded article.

## Description

### BACKGROUND ART

### Technical Field

The present invention relates to a molded article molded by a blow molding process, and particularly to a molded article molded by a direct-blow molding process.

### Related Art

Direct-blow molding process is to manufacture a molded article, by: extruding a molten resin by an extruder to thereby mold a cylindrical hollow parison; interposing the parison between mold-pieces of a twofold-split mold for blow molding, in a manner to clamp or close the split mold, to thereby cut off and thermally weld and seal a lower portion of the molten resin of parison by bottom pinching-off portions including blade portions disposed at a bottom of a cavity within the split mold, and to thereby cut off an upper portion of the molten resin of cylindrical parison by a parison cutter at an upper portion of the split mold, thereby forming the cylindrical hollow parison into a bottomed shape; and then inserting an air nozzle from a top portion of the split mold into the parison, and blowing air into the parison from the air nozzle.

The direct-blow molding process for manufacturing a molded article by the above-mentioned series of steps is capable of: providing a molded article in a more inexpensive manner when compared with an injection molding process and with a biaxial-stretching blow molding process, the latter using an injection molded preform; and dealing with various requirements which are difficult in case of a monolayer structure because the direct-blow molding process is capable of easily achieving a laminated structure by multi-layer molding a parison.

JP-2001-17094-A discloses a technique of biaxial-stretching blow molding which uses a direct-blow molded article as a preform. At the time of molding the preform in this case, the preform can be molded without using a core mold and without considering an undercut nature of the preform, thereby allowing to obtain a container having a reduced wall-thickness irregularity and a reduced stretch irregularity such as at a bottom portion of the container. Further, by multi-layer molding the parison, it becomes possible to easily manufacture a biaxial-stretching blow molded article of a laminated type, for example, to easily obtain a biaxial-stretched container of polyethylene terephthalate (hereinafter abbreviated to "PET") resin having a gas barrier layer as an intermediate layer.

In the direct-blow molding process, however, the bottom portion of the parison before blow molding exhibits a tendency to have a strongly anisotropic shape which is flatly collapsed from two opposite directions perpendicular to a parting line direction of the split mold, by the above-mentioned pinching-off portions. As a result, particularly at the bottom portion of the container after blow molding, there is apparently caused such a non-uniform nature that the container has an increased wall thickness and a reduced stretch ratio in the parting line direction as well as a reduced wall thickness and an increased stretch ratio in the direction perpendicular to the parting line direction, thereby possibly causing such a problem that the reduced wall thickness (reduced weight) of the whole container becomes difficult, or the ground contacting surface of the container at its bottom portion is distorted to thereby fail to ensure an excellent self-standing ability.

Further, there are formed two colinear pinch-off lines at a pinch-off portion of the container, and these pinch-off lines have a folded spread which is given by collapsing or folding a typically cylindrical parison into a flattened shape, and which is (outer diameter Dₚ of the parison)×π/2 (wherein π represents a circular constant), i.e., which is about 1.6Dₚ.
Thus, in those containers which are not allowed to take a larger blow-up ratio, such as in small-sized containers used for mascara, eyeliner and the like, in wide-mouthed containers having mouth portions of larger diameters than body portions, and in those containers to be formed of a material having a lower stretching ability, there are formed burrs by a pushed-out resin not only at the pinch-off portion of the container but also at that body portion of the container which corresponds to the parting line of the split mold, thereby resultingly causing a possible problem of external appearance of the container due to the two colinear pinch-off lines extended and exposed even to the body portion of the blow molded container.

### DISCLOSURE OF THE INVENTION

The present invention has been carried out to solve the above-mentioned problems of the prior art, and it is therefore an object of the present invention to propose a container by a direct-blow molding process which has a reduced wall thickness irregularity and a reduced stretch irregularity near the bottom portion of the container, and the formation of the pinch-off lines of the container caused by a split mold is limited within a region around the center of bottom portion of the container. It is an auxiliary object of the present invention to provide a novel blow molded article which is excellent in a uniform wall thickness, self-standing ability, and external appearance.

To achieve the above objects, the present invention provides a blow molded article obtained by a direct-blow molding process and including a bottom portion, a cylindrical body portion arranged above the bottom portion, and a cylindrical mouth portion arranged above the body portion, characterized in that the molded article includes at least three pinch-off lines caused by mold-pieces of a split bottom-mold, in a diverging manner from a center of a bottom face at the bottom portion.

For example, in case of forming three pinch-off lines in the present invention where the blow molded container includes at least three pinch-off lines caused by mold-pieces of a split bottom-mold, in a diverging manner from a center of a bottom face of the container, the mold is constituted of a twofold-split main-mold for forming the body portion and mouth portion and a threefold-split bottom-mold for forming the bottom portion, such that mold-pieces of the threefold-split bottom-mold are moved toward a central axis of a parison from three directions, respectively, and the parison is finally pinched off between the three pairs of confronting surfaces of the neighboring mold-pieces of the split bottom-mold, to thereby form the pinch-off lines.

In the present invention, it is also possible to form four or more pinch-off lines by increasing the number of mold-pieces of the split bottom-mold. Forming at least three pinch-off lines in a diverging manner makes it possible to make a bottom shape of a parison before blowing a remarkably isotropic shape when viewed in a circumferential direction, and to improve uniformities of a wall thickness and a stretch ratio at the bottom portion of a blow molded article and particularly in the circumferential direction of the bottom portion, as compared with a conventional situation where two pinch-off lines are colinearly formed in only two directions.

The blow molded article according to the present invention has a uniform wall thickness as well as a uniform stretch ratio near the bottom portion and particularly in the circumferential direction thereof as described above, thereby enabling a further reduced thickness, and thereby reducing a timewise deformation such as at a ground contacting portion of the container after molding to thereby achieve an excellent self-standing ability.

Next, in view of a forming region of pinch-off lines, conventional split molds are twofold-split so that a parison is clamped and flattened at a bottom pinch-off portion of the parison from two directions perpendicular to the parting-line direction. As a result, the bottom face of the blow molded container is formed with two colinear pinch-off lines having a folded spread of πDₚ/2 (wherein π represents a circular constant, and Dₚ represents an outer diameter of the parison) and passing through the center of the bottom face in the parting-line direction. On the contrary, the forming region of at least three pinch-off lines to be formed in a diverging manner such as in the present invention has a folded spread which is 2/3 times of the conventional folded spread in case of three pinch-off lines because the forming region is then limited within a circle having a diameter of πDₚ/3, and which is 1/2 times of the conventional folded spread in case of four pinch-off lines because the forming region is then limited within a circle having a diameter of πDₚ/4, thereby enabling to limit the forming region of pinch-off lines within a region near the central portion of the bottom face in both cases. Thus, the blow molded article according to the present invention is allowed to have an excellent external appearance, even if a molded article is not allowed to take a larger blow-up ratio, because pinch-off lines exposed up to the body portion under the blow molding by a conventional twofold-split mold.

Note that the number of pinch-off lines can be appropriately selected depending on a purpose, in view of a shape of a container and a balance among improved effects such as in an achievable uniformity of a bottom wall thickness, in a reduced forming region of pinch-off lines, a manufacturing cost of a split mold, and a molding performance upon using such a split mold.

In performing the present invention, it is preferable to arrange the pinch-off lines at substantially equal central angles. In this case, there can be obtained a more isotropic shape of a bottom portion of a parison and the pinching-off can be more smoothly achieved, thereby providing a molded article having a higher uniformity of the bottom portion.

In case of four pinch-off lines in the above, the four pinch-off lines are preferably arranged in a crossed shape, i.e., at equal central angles of 90°. In this case, it becomes possible to easily achieve interlocking between a split main-mold and a split bottom-mold particularly upon mold-clamping, and to provide a molded article having a sufficient uniformity at a bottom portion in a container at least having a cylindrical body portion, such that the forming region of pinch-off lines is limited within a circle having a diameter of πDₚ/4 (about 0.8Dₚ) which is sufficiently smaller than the diameter of the parison.

Upon performing the present invention, it is preferable to arrange pinch-off lines within a circle concentric with the bottom face and having a diameter less than πDₚ/2. In a direct-blow molded conventional container, the folded spread of pinch-off lines becomes πDₚ/2 (≈1.6Dₚ), and the folded spread cannot be made smaller than this value. On the contrary, according to the present invention, the container having the aforementioned constitution is a novel blow molded article, in which the forming region of pinch-off lines is limited within a region having a diameter of πDₚ/3 (≈1.0Dₚ) and πDₚ/4 (≈0.8Dₚ) in case of three and four pinch-off lines, respectively, thereby enabling to provide a small-sized container which particularly has a small blow-up ratio by a bottom portion having a smaller diameter as compared with a body portion and which has an excellent external appearance. As such, even if the bottom pinch-off portion were pinched off to have a folded spread less than πDₚ/2 in a conventional twofold-split mold, the excessive resin is pushed out as burrs from side portions of the split mold, thereby it may be possible that pinch-off lines are exposed to a body portion near a bottom portion of the molded article to thereby deteriorate the external appearance.

The blow molded container according to the present invention is preferably a biaxial-stretching blow molded container. In this case, there can be obtained a container by biaxial-stretching blow molding which adopts the direct-blow molded article as a perform. Since the preform can be molded into a shape which can be never obtained by an injection molded preform and without using a core mold and without considering an undercut nature of the preform, it is possible to provide biaxial-stretching blow molded containers in various shapes and having uniform wall thickness and uniform stretch, and thereby it is also possible to easily manufacture a biaxial-stretching blow molded container of a laminated type by multi-layer molding a parison.

Upon performing the present invention, it is preferable to make a wall of a blow molded article into a laminated structure. By making the wall into the laminated structure, there can be assuredly obtained a container effectively exhibiting desired physical properties and characteristics, and the laminated structure can be realized more easily than injection molding because the blow molded article is direct-blow molded. As embodiments of a blow molded article having a wall in the laminated structure, there can be proposed the following various constitutions.

Namely, in one embodiment, the laminated structure is constituted of, at least, a layer using a polyethylene terephthalate-based resin, and a layer using a polyethylene naphthalate (PEN)-based resin.
In this case, the combination of the layer of PEN-based resin with the layer of PET-based resin enables to effectively enhance those physical properties such as heat resistance, chemical resistance and ultraviolet-light cutting ability. Those characteristics appear to be insufficient in the PET-based resin.

In another embodiment, the laminated structure is constituted of, at least, an outer layer and an inner layer both using a polyethylene terephthalate-based resin, and an intermediate layer using a gas-barrier resin. As the gas-barrier resin in this case, there can be used any known resins such as: nylon-based resins such as nylon-6, nylon-66, and xylylene group-containing polyamide; ethylene-vinylalcohol copolymer; and polyacrylonitrile-based resin; thereby allowing to obtain a bottle body having an enhanced barrier property such as against oxygen and carbon dioxide gas. Such ability appears to be insufficient in the PET-based resin itself.

In a further embodiment, the laminated structure is constituted of, at least, an outer layer using polyethylene or polypropylene, and an inner layer using ethylene-vinylalcohol copolymer or polyethylene terephthalate-based resin. In this case, there is prevented adsorption of limonene and vitamins and the like, among active ingredients of contents to be accommodated within the bottle body.

In a still another embodiment, the laminated structure is constituted of, at least, an outer layer using polyethylene or polypropylene, an intermediate layer using a gas-barrier resin, and an inner layer using polyethylene or polypropylene. In this case, it becomes possible to obtain a bottle body having an enhanced barrier property against oxygen.

In a still further embodiment, the laminated structure is constituted of, at least, an outer layer and an inner layer both using a virgin resin material, and an intermediate layer using a reclaimed resin material. In this case, it becomes possible to use the reclaimed resin material, without anxiety.

In yet another embodiment, the laminated structure is constituted of, at least, an outer layer, and an inner layer formed of a synthetic resin having a lower compatibility with a synthetic resin forming the outer layer. In this case, it becomes possible to form the container comprising the synthetic resin-made outer layer forming an outer shell in a fixed shape and the synthetic resin-made inner layer which forms an inner bag laminated to the outer layer in a peelable manner, thereby allowing to use the container as a so-called "laminated peelable container".

### BRIEF DESCRIPTION OF THE DRAWINGS

The present invention will be described hereinafter in more detail with reference to the embodiments shown in the accompanying drawings.

FIG. 1 is a vertical half cross-sectional view of a blow molded article according to a first embodiment of the present invention.

FIG. 2 is a bottom view of the container shown in FIG. 1.

FIGS. 3a, 3b and 3c are explanatory views showing a pinching-off step by a split mold for molding the container shown in FIG. 1.

FIG. 4 is a bottom view of a blow molded article according to a second embodiment of the present invention.

FIGS. 5a and 5b are explanatory views showing a pinching-off step by a split mold for molding the container shown in FIG. 4.

FIG. 6 is an explanatory view showing a mold-clamping step in a conventional direct-blow molding process.

FIG. 7 is a bottom view of a comparative example 1 as a conventional example of a blow molded article.

FIGS. 8a and 8b are explanatory views showing a pinching-off step by a split mold upon molding the container shown in FIG. 7.

FIGS. 9a and 9b are a side view and a bottom view, respectively, of a blow molded article according to a third embodiment of the present invention.

FIGS. 10a and 10b are a side view and a bottom view, respectively, of a comparative example 2 as a conventional blow molded article.

FIG. 11 is a graph comparatively showing wall thickness distributions of the containers of the third embodiment and the comparative example 2.

FIGS. 12a and 12b are a front view and a bottom view, respectively, of a blow molded article according to a fourth embodiment of the present invention.

FIGS. 13a and 13b are a front view and a bottom view, respectively, of a comparative example 3 as a conventional blow molded article.

FIGS. 14a and 14b are a front view and a bottom view, respectively, of a blow molded article according to a fifth embodiment of the present invention.

FIG. 15 is a partially cut-away and partially enlarged front view of a sixth embodiment of the present invention.

FIG. 16 is a partially cut-away and partially enlarged vertical half cross-sectional view of a container from the molded article of FIG. 15 by biaxial-stretching blow molding.

### BEST MODE FOR CARRYING OUT THE INVENTION

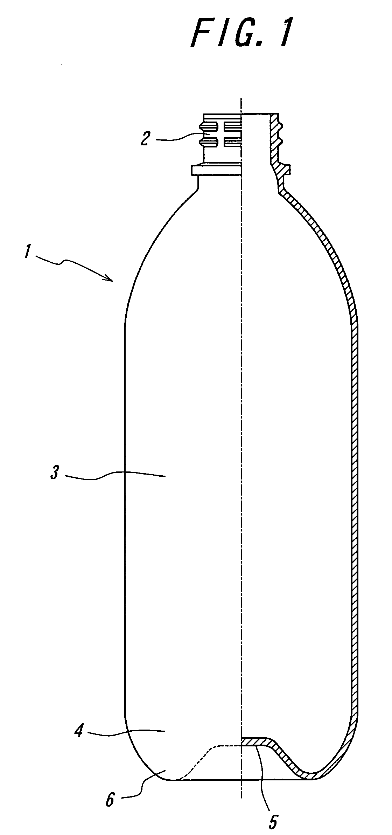

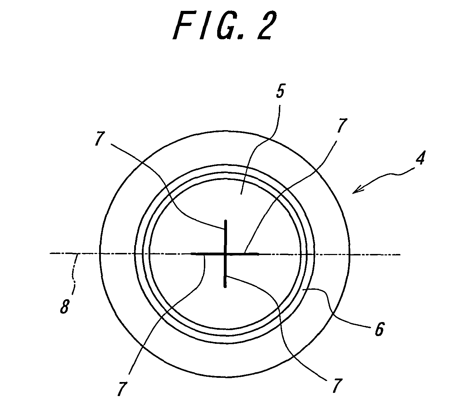

FIG. 1 and FIG. 2 show a blow molded article according to a first embodiment of the present invention. This blow molded article is a container 1 obtained by direct-blow molding, in a shape including a bottom portion 4, a body portion 3 arranged above the bottom portion 4, and a cylindrical mouth portion 2 arranged above the body portion 3, in which the bottom portion 4 includes a bottom face 5 having a concaved central portion to form a foot portion 6 which acts as a ground contacting portion in a self-standing posture. The container 1 has a minimum outer diameter of 24 mm at the mouth portion 2, a diameter of 65 mm at the body portion 3, and a height of 210 mm. Further, the bottom face 5 is formed with pinch-off lines 7 in a crossed shape caused by a split bottom-mold, and the forming region is limited within a circle having a diameter of about 18 mm around the center of the bottom face 5.

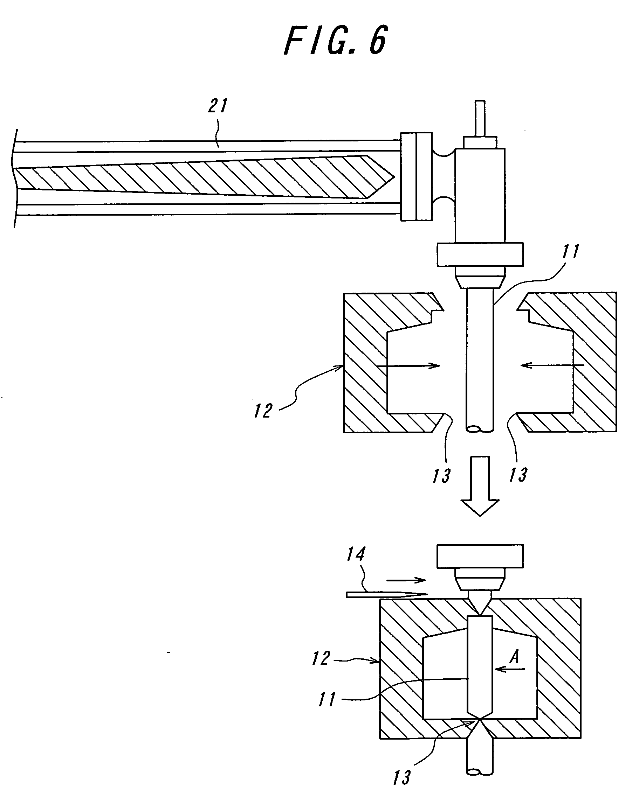

The container 1 is obtained by a direct-blow molding process. FIG. 6 is an explanatory view showing a mold-clamping step by a conventional twofold-split mold in the direct-blow molding process. Namely, the direct-blow molding process is to form a parison 11 into a bottomed cylinder, by: extrusion molding the parison 11 by an extruder 21 through a die; and clamping the parison 11 between mold-pieces 12 of a twofold-split mold by clamping the mold-pieces, to thereby cut off and thermally weld and seal a lower portion of the molten resin of parison by pinching-off portions 13 consisting of blade portions disposed at a bottom of a cavity within the twofold-split mold, and to thereby cut off an upper portion of the molten resin of cylindrical parison by a parison cutter 14 at an upper portion of the split mold. There is then performed blow molding, by inserting an air nozzle from a top portion of the twofold-split mold into the parison 11, and blowing air into the parison 11 from the air nozzle.

Here, it is possible to form the pinch-off lines 7 in the crossed shape in the first embodiment, by using a fourfold-split bottom-mold as that part of blow-molding mold which part forms the bottom portion 4 of the container 1. Note that similarly to the conventional one, there shall be used a twofold-split main-mold for forming those portions of the container 1 other than the bottom portion 4, i.e., for forming those portions corresponding to the body portion 3 and mouth portion 2.

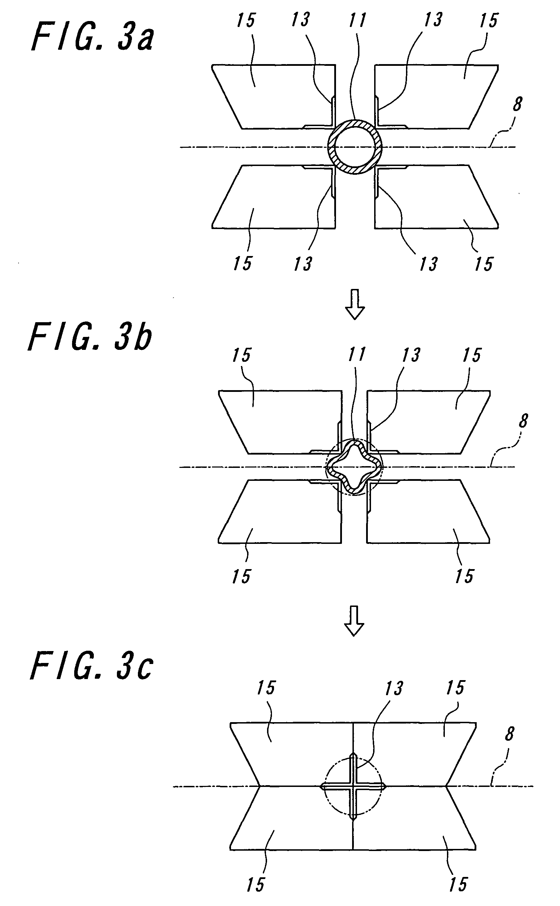

FIGS. 3a, 3b and 3c are explanatory views showing a pinching-off step for the parison 11 by four bottom-mold-pieces 15 having pinching-off portions 13 consisting of blade portions, respectively, of a fourfold-split bottom-mold. In this case, respective corner portions of the bottom-mold-pieces 15 of the fourfold-split bottom-mold firstly touch the parison 11 (FIG. 3a) and then respectively moved in directions toward the central axis of the parison 11 (FIG. 3b), and thereafter the parison 11 is pinched off into a crossed shape (FIG. 3c), thereby resultingly forming the pinch-off lines 7 in the crossed shape at the bottom face 5 of the bottom portion 4 of the parison 11. The parison 11 has its outer diameter of 22 mm in the first embodiment, and the pinch-off lines 7 in the crossed shape are formed within a circle having an outer diameter smaller than that of the parison 11. Note that identically to the following drawings, FIGS. 3a and 3b show a parting-line direction 8 represented by a two-dot chain line which shows the parting-line direction of the above-mentioned split main-mold.

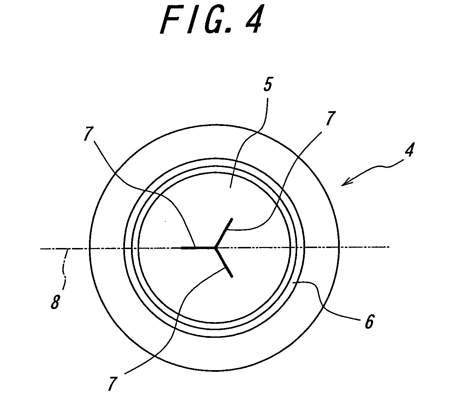

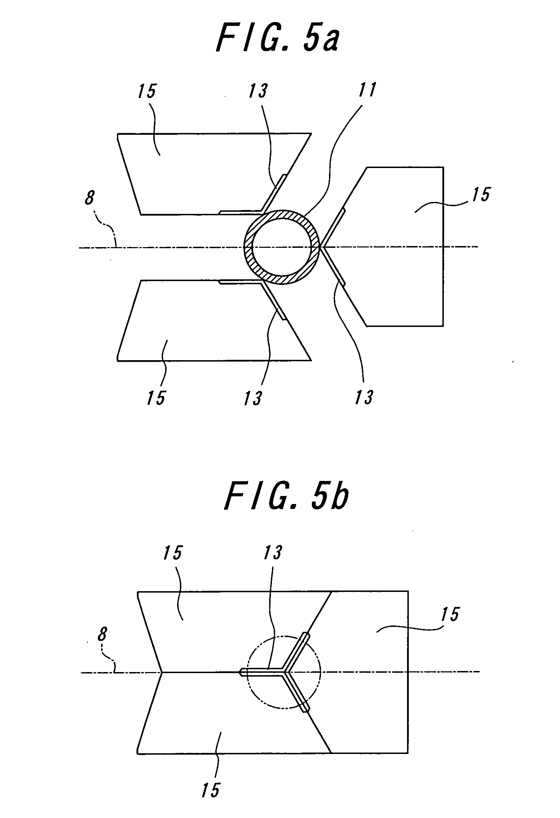

FIG. 4 is a bottom view of a blow molded article according to a second embodiment of the present invention, and this blow molded article is a container 1 having a whole shape which is the same as the first embodiment and having a bottom face 5 formed with three pinch-off lines 7 in a diverging manner at equal central angles, such that the formed region of the pinch-off lines is limited within a circle having a diameter of about 24 mm around the center of the bottom face 5. FIGS. 5a and 5b are explanatory views showing a pinching-off step for the parison 11 by three bottom-mold-pieces 15 of a threefold-split bottom-mold, from the bottom side of the parison.

It has been difficult to center the parison 11 with a higher precision in the parting-line direction 8 upon clamping the parison 11 in the pinching-off step by the mold-pieces 12 of the conventional twofold-split mold, and this difficulty is a main cause of the non-uniform nature previously noted herein. On the contrary, when the split bottom-mold constituting the bottom-mold-pieces 15 is of a three- or more-fold type as shown in FIGS. 3a, 3b and 3c and FIGS. 5a and 5b, the mold-pieces move toward the central axis of the parison 11 installed to vertically depend from the die, thereby enabling to simultaneously center the central axis of the parison 11 with a higher precision.

Although the first embodiment and second embodiment have adopted the pinch-off lines 7 formed at equal central angles, the "diverging manner" herein is not limited to have the equal central angles in the above embodiments, but meant to have such a shape where each pinch-off line extends in a radial direction from a central point. For example, even in adopting four bottom-mold-pieces 15 of a fourfold-split bottom-mold for forming an elliptical container in a bottom view having a higher flatness degree, there is a possibility to uniformalize the wall thickness distribution by varying the central angles of the mold-pieces. Namely, the central angles can be appropriately selected depending on the intended object. Only, it is preferable to set the central angles defined by neighboring pinch-off lines 7 at 180° or less, in order to form the bottom shape of the parison 11 as isotropically as possible, and to smoothly achieve the pinching off by the bottom-mold-pieces 15 of the split bottom-mold, as well as from a standpoint for exhibiting the centering function by the bottom-mold-pieces 15 of the split bottom-mold.

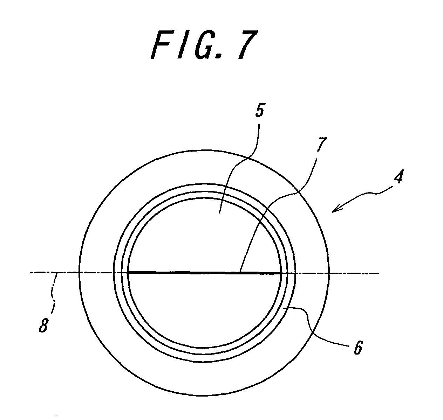

FIG. 7 shows a bottom face of a container 1 according to a comparative example 1 as a conventional example of a blow molded article. Although the container 1 of the comparative example 1 has the same whole shape as the first embodiment, this example has two colinear pinch-off lines 7 located at a bottom face 5 of the container and extending in a parting-line direction 8, and these pinch-off lines 7 are limited within a circle region having a diameter of about 35 mm around the center of the bottom face 5.

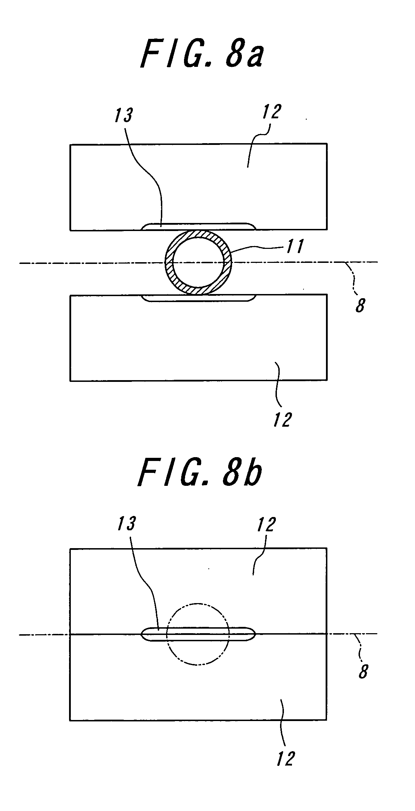

FIGS. 8a and 8b are explanatory views showing a pinching-off step for a parison 11 by mold-pieces 12 of a twofold-split mold, from the bottom side of the parison. In this case, the parison 11 is folded between the mold-pieces 12 into a folded spread of πDₚ/2 (Dₚ designates an outer diameter of the parison), i.e., a folded spread which is about 1.6 times the outer diameter of the parison 11.

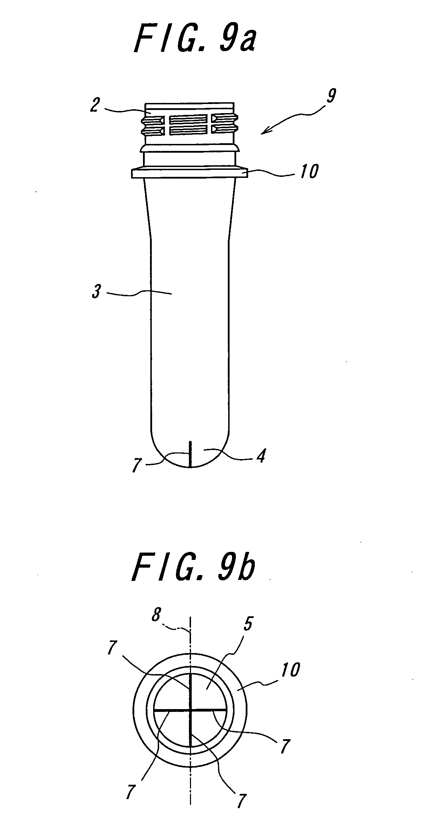

FIGS. 9a and 9b show a blow molded article according to a third embodiment of the present invention. In this case, the blow molded article is a molded article 9 in a test tube shape additionally provided with a neck ring 10, and has a minimum outer diameter of 24 mm at a mouth portion 2, a diameter of a body portion 3 varying from 24 mm at an upper end to 22 mm at a substantially central height position, and a height of 105 mm. The molded article 9 has a bottom portion 4 which is in a hemispherical shell shape. It also has a bottom face 5 formed with pinch-off lines 7 in a crossed shape within a region of the bottom portion 4.
This molded article 9 is formed from a parison having an outer diameter of 18 mm.

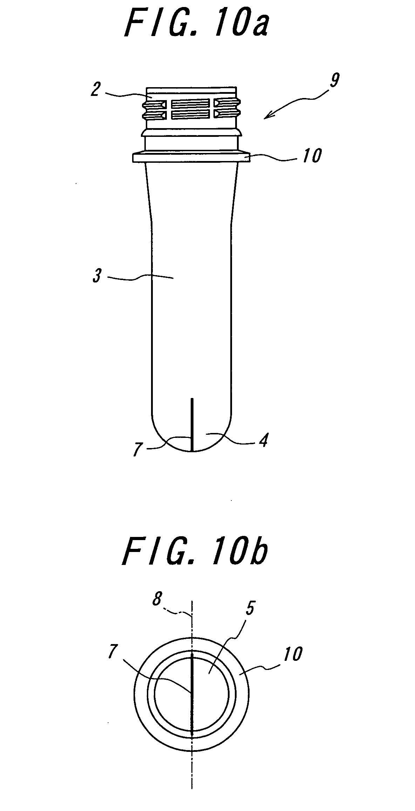

FIGS. 10a and 10b show a comparative example 2, for comparing the above third embodiment with a molded article in the same shape obtained by the conventional method. This comparative example 2 has two colinear pinch-off lines 7 formed in a parting-line direction 8, and these two colinear pinch-off lines 7 have been extended beyond the region of a bottom portion 4 up to a body portion 3 because resins are largely pushed out from the pinch-off portion of the molded article.

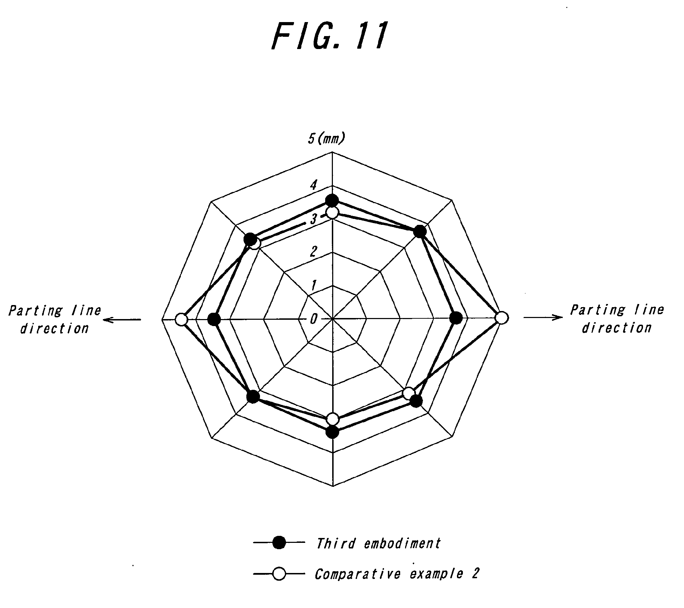

FIG. 11 is a graph showing a wall thickness distribution of a peripheral portion of the bottom portion 4 at a height of 12 mm of molded articles 9 according to the third embodiment of the present invention shown in FIGS. 9a and 9b and the comparative example 2 in FIGS. 10a and 10b. In the comparative example 2, there is clearly shown a tendency that the wall thickness is relatively large in the parting-line direction 8 and small in a direction perpendicular thereto, and there is recognized a maximum wall thickness deviation of 1.82 mm. Further, there is also recognized a considerable wall thickness difference between the right and left in the parting-line direction 8, thereby showing a deteriorated centering precision of the parison upon pinching off. Meantime, the wall thickness distribution of the molded article according to the third embodiment is practically isotropic, with a maximum wall thickness deviation of 0.33 mm, a value less than 1/5 of the comparative example 2.

Although the molded article 9 of the third embodiment can be directly used as a small-sized container of a smaller blow-up ratio, this molded article 9 can be used as a preform of a biaxial-stretching blow molded article because the molded article 9 has a larger wall thickness and an extremely small wall thickness deviation.

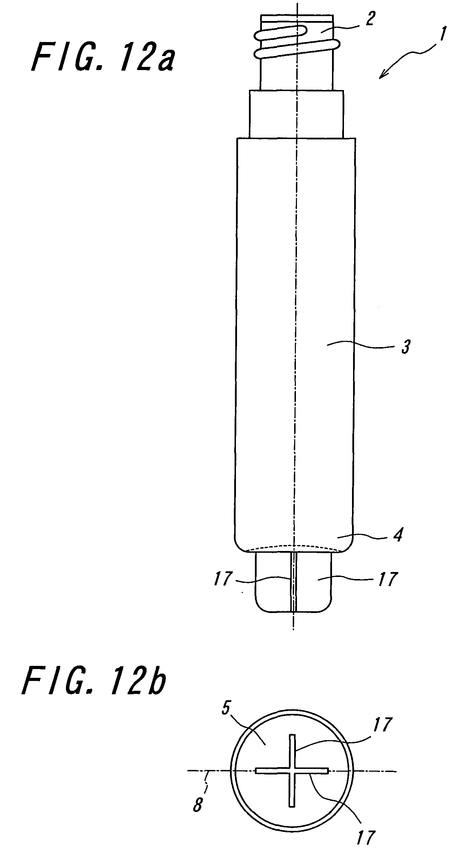

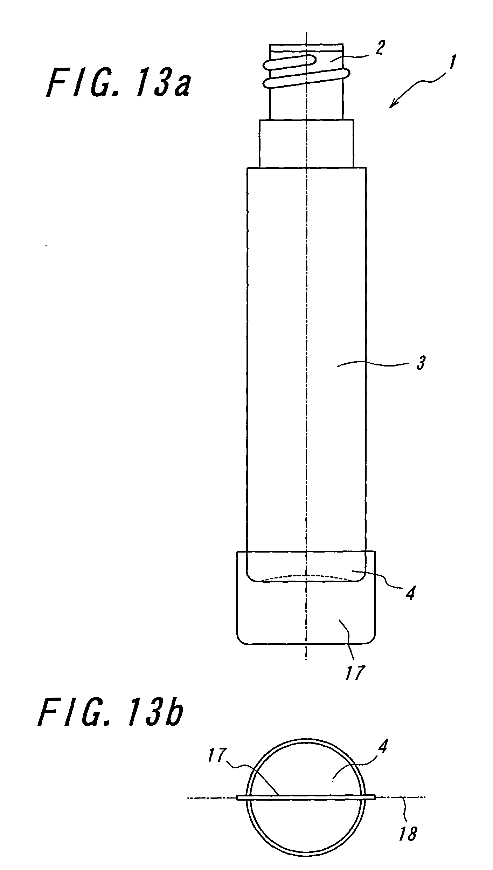

FIGS. 12a and 12b show a blow molded article according to a fourth embodiment of the present invention. This blow molded article is a small-sized container 1 obtained by direct-blow molding, and this container 1 is in a shape including a cylindrical body portion 3 above a bottom portion 4 and including a cylindrical mouth portion 2 above the body portion 3, so as to be used as a container body for mascara or eyeliner by threadingly fastening a cap screw having a shafted brush onto the mouth portion 2. The container 1 has a minimum outer diameter of 10.5 mm at the mouth portion 2, a diameter of 15 mm at the body portion 3, and a height of 75 mm. The container includes a bottom face 5 formed with pinch-off lines in a crossed shape having a formed region within a circle having a diameter of about 9 mm. To clarify the comparison with a comparative example 3 to be described later, FIGS. 12a and 12b and FIGS. 13a and 13b show states before burred portions 17 which are excessive resins pushed out near the pinch-off portion are cut out.

While the container 1 of the fourth embodiment is blow molded by using a parison having an outer diameter of 10 mm which is slightly smaller than the minimum outer diameter of the mouth portion 2, the pinch-off lines are limited within the region of about 9 mm as described above by pinching off the parison by bottom-mold-pieces 15 of a fourfold-split bottom-mold, so that the region of the pinch-off lines is sufficiently limited within the bottom face having a diameter of 15 mm. Although the blow-up ratio from the body portion 3 toward the bottom portion 4 is as small as 1.5 (15 mm/10 mm), the pinch-off lines are never exposed up to the body portion 3 as also shown by the shape of burred portions 17. Namely, the container 1 of the fourth embodiment is small-sized and has a superior external appearance and a smaller blow-up ratio, which has been never provided up to now by a direct-blow molding process.

FIGS. 13a and 13b show a comparative example 3 as a container 1 obtained by mold-pieces 12 of the conventional twofold-split mold, to be compared with the above fourth embodiment. The comparative example 3 is in the same container shape as the fourth embodiment. However, when the container 1 having a small blow-up ratio of 1.5 is molded by the mold-pieces 12 of the conventional split mold such as in the comparative example 3, burrs are caused not only at the pinch-off portion but also at the parting line of body portion 3 as shown by the shape of a burred portion 17, thereby resulting in formation of pinch-off lines also at the body portion 3. This tendency becomes more considerable, with a smaller blow-up ratio.

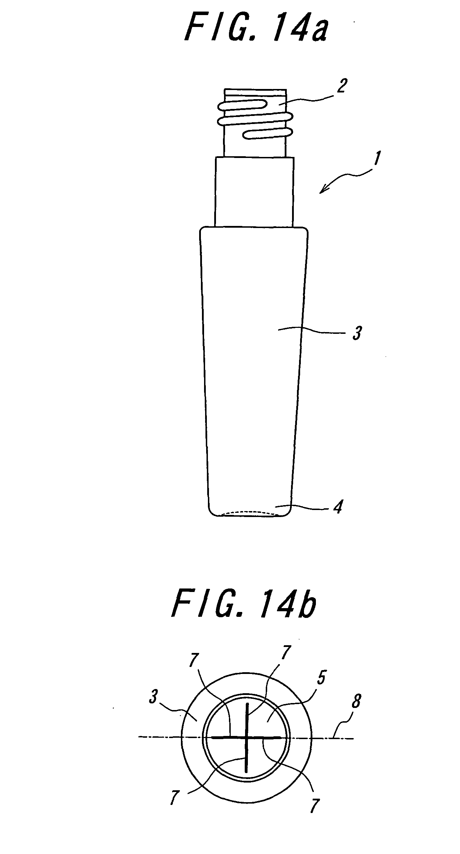

FIGS. 14a and 14b show a blow molded article according to a fifth embodiment of the present invention, which is cylindrical similarly to the container of the fourth embodiment. However, this blow molded article is in a shape having a diameter gradually reducing from an upper end of a body portion 3 to a bottom portion 4, and having a minimum outer diameter of 10 mm at a mouth portion 2, a diameter of 9.5 mm at a bottom portion 4 which is slightly smaller than the minimum outer diameter, a maximum diameter of 15 mm at the body portion 3, and a height of 60 mm, as well as pinch-off lines 7 which are in a crossed shape at a bottom face 5 and have a forming region within a circle having a diameter of about 7 mm.

The parison for blow molding of this container 1 has an outer diameter of 8 mm, and the blow-up ratio near the bottom portion 4 is as extremely small as about 1.2 (9.5 mm/8 mm). However, formation of pinch-off lines 7 is limited within the bottom face, thereby allowing to provide such a blow molded container which has an excellent external appearance even in such a shape having a smaller blow-up ratio as a whole and having the bottom portion 4 in the convergedly tapered shape, and which has not been conventionally provided.

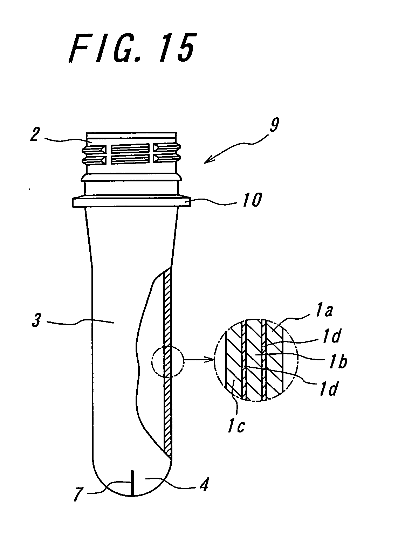

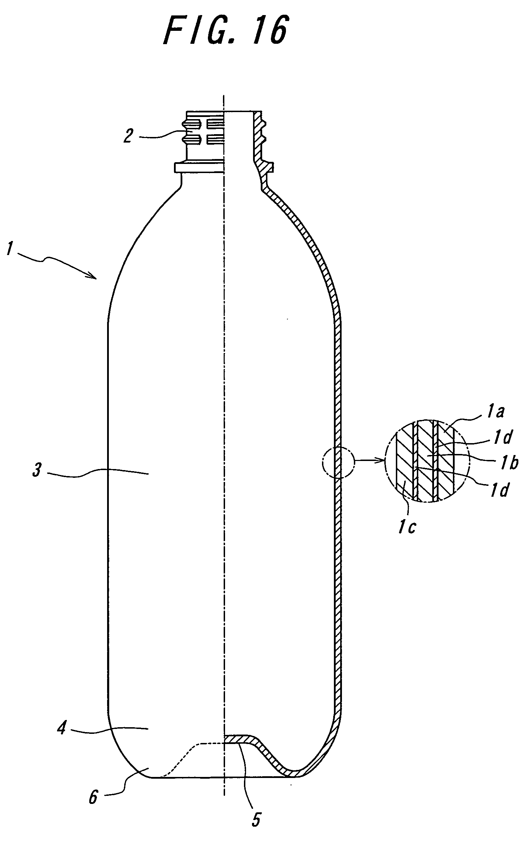

FIG. 15 shows a molded article according to a sixth embodiment of the present invention, which is in the same shape as the third embodiment shown in FIG. 9 and has a wall in a laminated structure. Further, FIG. 16 shows a container 1 which is in the same shape as the first embodiment and which has been obtained by biaxial-stretching blow molding a preform consisting of the molded article 9 of the sixth embodiment based on direct-blow molding.

By multi-layer molding the parisons for direct-blow molded articles, it becomes possible to easily form laminated structures and to precisely achieve laminated structures such as concerning a wall thickness ratio. Thus, by using such a molded article as a preform, it becomes possible to easily manufacture a biaxial-stretching blow molded container of a laminated type.

Further, there is inserted a core guide into a parison from the above of the parison upon air blowing in direct-blow molding, and it becomes possible at this time to seal an upper end section of a mouth portion of the parison by an inner layer. Thus, by using a direct-blow molded preform, it becomes possible to avoid infiltration of water via upper end section of the mouth portion even in using a water absorbing resin such as ethylene-vinylalcohol copolymer or nylon as the intermediate layer, thereby allowing to easily preserve and manage the preform before biaxial-stretching blow molding. There will be described hereinafter concrete embodiments of such laminated structures.

Embodiment 1 of laminated molded article 9 is constituted of a combination of layer(s) using PET and layer(s) using PEN. The embodiment 1 embraces: [A] a combination of a PET-made outer layer 1a and a PEN-made inner layer 1c; [B] a combination of a PET-made outer layer 1a and a PEN-made inner layer 1c; [C] a combination of a PEN-made outer layer 1a and a PET-made inner layer 1c; and [D] a combination of a PEN-made outer layer 1a, a PET-made intermediate layer 1b, and a PEN-made inner layer 1c. In any of these combinations, there may be provided an adhesive layer 1d between the layers. The constitutions [A] and [D] use PEN as the inner layer 1c, thereby allowing to obtain a container having a higher chemical resistance (alkali resistance). Any of the combinations of the embodiment 1 exhibits an ultraviolet-light shielding function capable of shielding ultraviolet light at wavelengths of 370 nm or less, by making the thickness of PEN to be 1 to 20 %.

Embodiment 2 of laminated molded article 9 is constituted of a combination of an outer layer 1a and an inner layer 1c both using PET and an intermediate layer 1b using a gas-barrier resin, and embraces [E] a combination including an intermediate layer 1b made of ethylene-vinylalcohol copolymer, [F] a combination including an intermediate layer 1b made of a xylylene group-containing polyamide, and [G] a combination including an intermediate layer 1b made of polyacrylonitrile. Since adhesive layers 1d are provided between the other layers, there can be assuredly obtained a container 1 free of inter-layer separation.
Particularly, the combination of [F] allows to obtain a container 1 having a barrier property against oxygen, carbon dioxide gas and the like, whose barrier property is insufficient in case of PET only.

Embodiment 3 of laminated molded article 9 is constituted to include an outer layer 1a using polyethylene or polypropylene, an inner layer 1c using ethylene-vinylalcohol copolymer or PET-based resin, and an adhesive layer 1d for joining these layers, to thereby obtain a container 1 which never absorbs active ingredients of contents accommodated and retained within the container 1.

Embodiment 4 of laminated molded article 9 is constituted to include an outer layer 1a using polyethylene or polypropylene, an intermediate layer 1b using xylylene group-containing polyamide as a gas-barrier resin, an inner layer 1c using polyethylene or polypropylene, and adhesive layers 1d for joining them, to thereby provide a container 1 exhibiting a higher barrier property against oxygen.

Embodiment 5 of laminated molded article 9 is constituted to include an outer layer 1a using nylon-6, an inner layer 1c using polyethylene or polypropylene, and an adhesive layer 1d for joining them, thereby allowing to provide a container 1 of reduced thickness having a higher piercing strength and a higher surface gloss.

Embodiment 6 of laminated molded article 9 is to constitute a laminated structure including an outer layer 1a and an inner layer 1c both using a PET-made virgin resin material and an intermediate layer 1b using a reclaimed resin material of PET, thereby allowing to safely utilize the reclaimed resin material in a state where the layer thickness can be easily controlled. Further, it becomes possible to handle the molded article as a single element of PET upon collection by type.

Embodiment 7 of laminated molded article 9 is to constitute a laminated structure including an outer layer 1a comprising PET mixed with antistatic agent, an intermediate layer 1b comprising PET mixed with ultraviolet absorber, and an inner layer 1c using a virgin resin material of PET, thereby allowing to obtain a useful antistatic effect, and to obtain safe accommodation of contents irrespectively of addition of additives and without loss due to bleed out of ultraviolet absorber because the ultraviolet absorber is added to the intermediate layer. Note that the resin which can be used in this embodiment is not limited to PET, and the same effect can be exhibited even by other resins.

Embodiment 8 of laminated molded article 9 is to constitute a laminated structure including: an outer layer 1a molded as an outer shell having a required ability for holding a self shape, and made of a synthetic resin material such as polyethylene, polypropylene, and PET; and an inner layer 1c molded into a bag shape capable of flexible deformation, and made of a synthetic resin material such as nylon, ethylene-vinylalcohol copolymer and polyethylene terephthalate, which has a lower compatibility with the outer layer 1a; thereby allowing to provide a laminated peelable container.

Embodiment 9 of laminated molded article 9 is to use polished polypropylene or polyethylene, or alternatively frosted polypropylene or polyethylene for an outer layer 1a, thereby allowing to easily making an external appearance of a product into a polished or frosted state.

Embodiment 10 of laminated molded article 9 is to constitute a laminated structure including an outer layer 1a comprising ethylene-vinylalcohol copolymer or PET, and an inner layer 1c comprising a polyolefin resin, thereby allowing to make an outer surface of the molded article into a polished state.

As apparent from the above detailed description, the present invention enables to realize a container by a direct-blow molding process, which has a reduced wall-thickness irregularity and a reduced stretch irregularity near the bottom portion of the container, and the formation of pinch-off lines caused by the split mold is limited within a region near a central part of the bottom face of the container. The blow molded article according to the present invention is a novel product which is excellent in a uniform wall thickness, self-standing ability, and external appearance.

Although the present invention has been explained with reference to the preferred embodiments, it is apparent that the present invention can be performed in various configurations other than the above, without departing from the scope of the present invention.

## Claims

1. A blow molded article obtained by a direct-blow molding process and including a bottom portion (4), a cylindrical body portion (3) arranged above the bottom portion (4), and a cylindrical mouth portion (2) arranged above the body portion (3), wherein said molded article includes at least three pinch-off lines (7) caused by mold-pieces (15) of a split bottom-mold, in a diverging manner from a center of a bottom face (5) at said bottom portion (4).

2. The blow molded article according to claim 1, wherein said pinch-off lines (7) are arranged at substantially equal central angles.

3. The blow molded article according to claim 2, wherein said pinch-off lines (7) comprise four pinch-off lines arranged in a crossed shape.

4. The blow molded article according to claim 1, 2 or 3, wherein said pinch-off lines (7) are formed within a circle which is concentric with said bottom face (5) and which has a diameter less than πDₚ/2, wherein π represents a circular constant and Dₚ represents an outer diameter of a parison.

5. The blow molded article according to claim 1, 2, 3 or 4, wherein said blow molded article is molded into a container by biaxial-stretching blow molding.

6. The blow molded article according to claim 1, 2, 3, 4, or 5, wherein said blow molded article has a wall in a laminated structure.

7. The blow molded article according to claim 6, wherein said laminated structure is constituted to include, at least, a layer using a polyethylene terephthalate-based resin, and a layer using a polyethylene naphthalate-based resin.

8. The blow molded article according to claim 6, wherein said laminated structure is constituted to include, at least, an outer layer (1a) and an inner layer (1c) both using a polyethylene terephthalate-based resin, and an intermediate layer (1b) using a gas-barrier resin.

9. The blow molded article according to claim 6, wherein said laminated structure is constituted to include, at least, an outer layer (1a) using polyethylene or polypropylene, and an inner layer (1c) using ethylene-vinylalcohol copolymer or polyethylene terephthalate-based resin.

10. The blow molded article according to claim 6, wherein said laminated structure is constituted to include, at least, an outer layer (1a) using polyethylene or polypropylene, an intermediate layer (1b) using a gas-barrier resin, and an inner layer (1c) using polyethylene or polypropylene.

11. The blow molded article according to claim 6, wherein said laminated structure is constituted to include, at least, an outer layer (1a) and an inner layer (1c) both using a virgin resin material, and an intermediate layer (1b) using a reclaimed resin material.

12. The blow molded article according to claim 6, wherein said laminated structure is constituted to include, at least, an outer layer (1a), and an inner layer (1c) formed of a synthetic resin having a lower compatibility with a synthetic resin forming said outer layer (1a).
